(19) Europäisches Patentamt
European Patent Office
Office européen des brevets

(11) EP 1 715 165 B1

(12) EUROPÄISCHE PATENTSCHRIFT

(45) Veröffentlichungstag und Bekanntmachung des Hinweises auf die Patenterteilung:
28.02.2018 Patentblatt 2018/09

(51) Int Cl.:
F02D 41/18 (2006.01)　　　F02D 41/24 (2006.01)
F02D 41/14 (2006.01)　　　F02D 41/22 (2006.01)
G01M 15/04 (2006.01)　　　G05B 23/02 (2006.01)
F02D 11/10 (2006.01)

(21) Anmeldenummer: 06006356.7

(22) Anmeldetag: 28.03.2006

(54) **Verfahren und Vorrichtung zur Fehlerdiagnose für Verbrennungsmotoren**

Method and apparatus of fault diagnosis for internal combustion engines

Procédé et dispositif de diagnostic de défauts pour moteurs thermiques

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.04.2005 DE 102005019017**

(43) Veröffentlichungstag der Anmeldung:
**25.10.2006 Patentblatt 2006/43**

(73) Patentinhaber: **IAV GmbH Ingenieurgesellschaft Auto und Verkehr 10587 Berlin (DE)**

(72) Erfinder:
• **Jeinsch, Torsten, Dr.-Ing.**
**23996 Bad Kleinen (DE)**
• **Millich, Elmar, Dr. rer. nat.**
**47239 Duisburg (DE)**
• **Rabba, Heiko**
**38116 Braunschweig (DE)**

• **Schultalbers, Matthias**
**38536 Meinersen (DE)**
• **Ding, Steven X., Prof. Dr.-Ing.**
**45894 Gelsenkirchen (DE)**
• **Heyden, Dirk**
**47239 Duisburg (DE)**
• **Weinhold, Nick Werner**
**47918 Tönisvorst (DE)**

(56) Entgegenhaltungen:
WO-A1-99/34187　　　DE-A1- 10 015 225
DE-A1- 19 939 872　　　US-A1- 2004 078 171
US-B1- 6 240 343

• KIMMICH F ET AL: "Fault detection for modern Diesel engines using signal- and process model-based methods" CONTROL ENGINEERING PRACTICE, PERGAMON PRESS, OXFORD, GB LNKD-DOI:10.1016/J.CONENGPRAC.2004.03.002, Bd. 13, Nr. 2, 1. Februar 2005 (2005-02-01), Seiten 189-203, XP004560100 ISSN: 0967-0661

**Beschreibung**

Die Erfindung betrifft ein Verfahren und eine Vorrichtung zur Fehlerdiagnose für Verbrennungsmotoren. Moderne Verbrennungsmotoren sind zu deren Steuerung und Regelung mit einer elektronischen Motorsteuerung verbunden, in welcher Messsignale der angeschlossenen Sensoren, Betriebszustände, Umgebungsbedingungen, Fahrereingriffe etc. erfasst werden und mittels komplexer Steueralgorithmen Stellsignale für die Ansteuerung der Aktoren, z. B. Einspritzelemente, Drosselklappe usw. ermittelt werden. Für die Überwachung der Sensoren und Stellglieder sind Fehlerdiagnoseverfahren notwendig, die sowohl für die Fehlerdiagnose in der Werkstatt als auch für die Fehlerdiagnose "on bord" im Betrieb des Fahrzeuges geeignet sind. Vorzugsweise sollen Diagnosewerte ermittelt werden, die ohne Eingriffe in die Steuergerätestruktur und ohne zusätzliche Sensorik eine Fehlererkennung und Fehlerisolation gemäß der Fehlerursache ermöglichen.

Vorbekannt ist aus der DE 197 50 191 A1 eine Fehlererkennung der Lasterfassung, wobei das Luftmassensignal eines Luftmassenmessers mit dem aus einem Saugrohrmodell gewonnenen Luftmassensignal, welches aus dem Saugrohrdruck und dem Umgebungsdruck sowie der Drosselklappenstellung gewonnen wird, verglichen wird. Es erfolgt eine Auswertung auf einen definierten Schwellwert und bei dessen Überschreitung wird ein Fehler in der Lasterfassung erkannt. Des Weiteren kann eine Fehlerseparierung erfolgen. Es werden dazu zusätzliche Signale, beispielsweise die Überwachung der Messwerte von beiden Drosselklappenpotentiometern zueinander benötigt. Ein weiteres zur Fehlerseparierung genutztes Signal ist die Gemischadaption auf Basis der Lambdaregelung. Mit der Gemischadaption wird die Anpassung des Luft-Kraftstoffverhältnisses an den Lambdasollwert erreicht. In der Lambdaregelung spiegeln sich die Verbrennungsvorgänge im Brennraum wider, wobei über den Reglerausgang der Gemischadaption diese ausgewertet werden. Anhand der Überwachung des Wertes der Gemischadaption auf einen Schwellwert und in Kombination mit dem aus dem Vergleich zwischen modellierter Luftmasse zu gemessener Luftmasse ermittelten Fehlerwert und der Überwachung der Drosselklappenstellungsgeber zueinander kann eine Fehlerseparierung erfolgen. Es werden Fehler des Drosselklappenwinkelsensors, Fehler der Druckerfassung (Umgebungsdruck, Saugrohrdruck o. Ansauglufttemperatursensor) und Fehler im HFM-Signal voneinander separiert. Die Druckerfassung wird als gesamte Fehlergruppe beurteilt, d. h. eine genauere

Auflösung, beispielsweise welcher der Drucksensoren fehlerhafte Signale liefert oder ein Fehler des Ansauglufttemperatursensors, kann nicht erfolgen. Fehler, die auf Leckagen im Saugrohr zurückzuführen sind, können ebenfalls nicht separiert werden.

Vorbekannt ist aus der DE 100 21 639 C1 ein Verfahren zur Diagnose des Saugrohrdrucksensors und des Umgebungsdrucksensors. Es werden beim Start die Werte des Saugrohrdruckes mit den Werten des Umgebungsdrucksensors verglichen. Bei einer Abweichung der Signale erfolgt im ungedrosselten Betrieb eine Überprüfung, welcher der Sensoren fehlerhaft ist. Dazu wird ein weiteres, aus der Messung der Luftmasse gewonnenes, modelliertes Saugrohrdrucksignal im ungedrosselten Betrieb ermittelt. Bei dem vorgeschlagenen Verfahren wird das gemessene Luftmassensignal als fehlerfrei vorausgesetzt. Die US 2004/078171 A1 beschreibt eine Systemdiagnose mit Fehleridentifikation. Dabei werden Sätze von Abweichungen zwischen Modell- und Messwerten mit gespeicherten Sätzen verglichen und davon ausgehend Fehlerursachen identifiziert.

Der Erfindung liegt die Aufgabe zugrunde, ein Verfahren und eine Vorrichtung zur Fehlerdiagnose von Verbrennungsmotoren zu schaffen, wobei einzelne Fehler gezielt isoliert werden können und gleichzeitig eine quantitative Bestimmung der Fehlergröße erfolgt.

Diese Aufgabe wird bei gattungsgemäßen Verfahren gemäß Anspruch 1 und für gattungsgemäße Vorrichtungen gemäß Anspruch 3 erfindungsgemäß durch die jeweils kennzeichnenden Merkmale der jeweiligen Patentansprüche gelöst.

Erfindungsgemäß vorteilhaft erfolgt bei dem Verfahren zur Fehlerdiagnose eines Verbrennungsmotors die Auswertung wenigstens einer erfassten Messgröße in Bezug auf einen zugehörigen, durch eine Modellrechnung für diese Größe erhaltenen Modellwert. Die Abweichung des Messwertes vom Modellwert wird dabei zur Auswertung herangezogen, wobei die Fehlerursache nachfolgend durch eine weitere Fehlerisolation bestimmt wird. Dazu erfolgt wenigstens an zwei vordefinierten Arbeitspunkten des Motors eine Aufnahme des Mess- und Modellwertes, wobei aus den unterschiedlichen Abweichungen von Mess- und Modellwert an den einzelnen Arbeitspunkten eine weitere Diagnoseinformation gebildet wird. Die Bestimmung der Fehlerursache erfolgt auf Basis der weiteren Diagnoseinformation und der Abweichung der Messwerte vom Modellwert mittels einer Gesamtbeurteilung (Fusion) dieser Werte. Die Abweichung des Messwertes vom Modellwert und die weiteren Diagnoseinformationen aus der arbeitspunktabhängigen Veränderung der Abweichung von Mess- und Modellwert werden zur Bestimmung der Fehlerursache ausgewertet.

Erfindungsgemäß vorteilhaft nutzt die Fehlerdiagnose in der Motorsteuerung vorhandene Mess- und Modellwerte, so dass eine Fehlerdiagnose ohne zusätzliche Sensorik möglich ist.

Es wird für die Fehlerdiagnose die bestehende Reglerstruktur analysiert und zur Fehlerisolation gezielt deren nichtlineares Verhalten über die verschiedenen Arbeitspunkte genutzt. Aufgrund der arbeitspunktbezogenen Analyse der einzelnen Residuen und der Auswertung der unterschiedlichen Werte der Residuen an den jeweiligen Arbeitspunkten werden zusätzliche Merkmale zur Fehlerdiagnose gewonnen. Die Interpretation des durch die Nichtlinearitäten hervorgerufenen, arbeitspunktspezifischen Verhaltens der Residuen als zusätzliche Modellwerte zur Fehleranalyse ist Kern des erfindungsgemäßen Verfahrens.

Weitere Einzelheiten der Erfindung werden in der Zeichnung anhand von schematisch dargestellten Ausführungsbeispielen beschrieben.

Hierbei zeigen:

Figur 1 die Grundstruktur der Fehlerdiagnose,
Figur 2 eine aus vorhandenen Steuergerätefunktionen identifizierte Regelkreisstruktur,
Figur 3 eine Analyse der Reglerstruktur mit Diagnoseeinrichtung,
Figur 4 die Fusion der Daten.

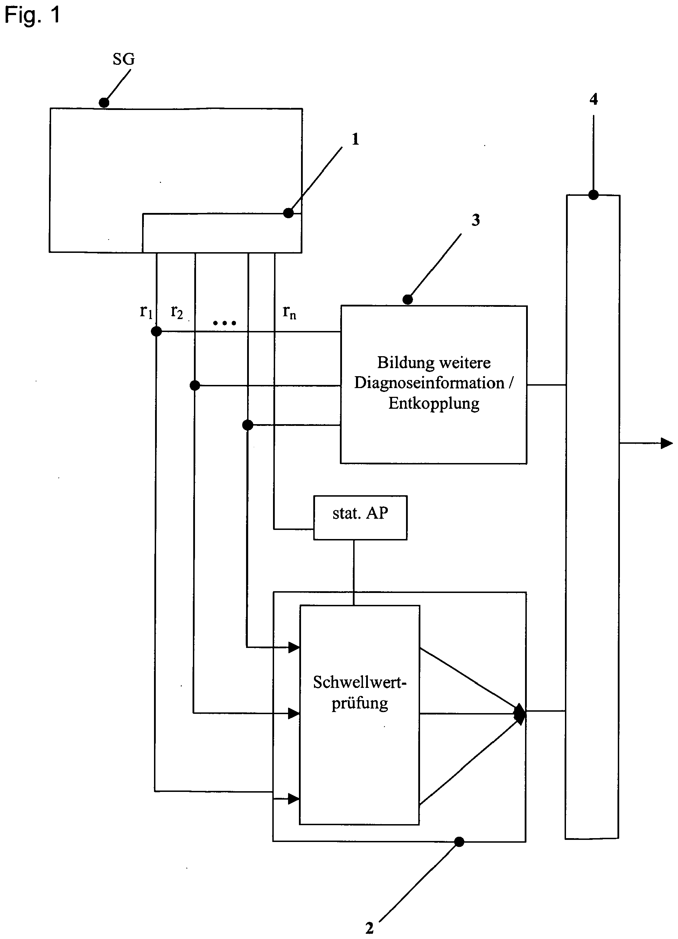

In Fig. 1 ist die Grundstruktur der erfindungsgemäßen Fehlerdiagnose dargestellt. Ausgehend von im Steuergerät SG vorhandenen Mess- und Modellwerten der Brennkraftmaschine werden in einem ersten Verfahrensschritt 1 Residuen $r_1$, $r_2$..., $r_x$ gebildet, welche der Fehlerdiagnose zur Verarbeitung zur Verfügung gestellt werden. Die Residuen $r_1$, $r_2$..., $r_x$ sind dabei Werte, die aus der Abweichung von Messwerten und Modellwerten der für die Steuerung und Regelung der Brennkraftmaschine benötigten Größen gebildet werden. Diese Größen können sowohl Umgebungsbedingungen (z. B. Ansauglufttemperatur), Betriebsgrößen der Brennkraftmaschine (z. B. Lambdawert), Stellgrößen (z. B. Einspritzmenge) oder berechnete Zwischengrößen der Regelungsverfahren (z. B. Adaptionswerte) sein, die auf Mess- und/oder Modellwerten basieren. Die Residuen können direkt aus einem Vergleich von Mess- und Modellwerten gebildet oder nachfolgend aus im Steuergerät vorliegenden Stellgrößen, die auf Basis der Abweichung des Mess- vom Modellwert gebildet wurden, errechnet werden. So lässt sich beispielhaft in einer Ausführungsform ein Residuensignal $r_1$ für die Temperatur (Temperaturresiduum) im Ansaugtrakt aus der modellierten Temperatur und einem Messwert für die Temperatur direkt aus der Differenz beider Werte bilden. Eine weitere Möglichkeit für die Bildung des Residuums $r_2$ aus den im Steuergerät vorhandenen Daten ist die Nutzung von vorhandenen Korrekturwerten. Beispielsweise kann als Residuum $r_2$ für das Signal der Zylinderfüllung (Füllungsresiduum) des Motors ein berechneter Korrekturfaktor für den Massenstrom (Massenstromkorrektur) genutzt werden. Dieser Korrekturwert kann beispielsweise aufgrund der Abweichung zwischen dem modellierten Füllungssignal auf Basis des Saugrohrdrucks und dem auf Basis der Drosselklappenstellung berechneten Füllungssignal erfolgen. Alternativ kann das Messsignal eines Massenstrommessers z. B. eines Heißfilm-Luftmassenmessers (HFM) genutzt werden. Eine weitere Möglichkeit der Residuenbildung ist die Nutzung des Regelkreises der Lambdasondenregelung. Die Kraftstoffmengenanpassung aufgrund der Lambdaregelung kann hierbei als weiteres Residuum $r_3$ gebildet werden. Die am Ausgang des Lambdareglers ausgegebene Stellgröße kann dabei als Diagnoseinformation verwendet werden.

Das erfindungsgemäße Verfahren der Fehlerdiagnose wertet die Residuen in einem Verfahrensschritt 2 hinsichtlich ihrer Absolutwerte an vorgebbaren Arbeitspunkten aus. In einer bevorzugten Ausführungsform werden die Residuen hinsichtlich spezifischer Schwellwerte ausgewertet. Parallel zur Auswertung der Absolutwerte der Residuen erfolgt in einem Verfahrensschritt 3 eine komplexe Fehlerdiagnose der Residuen, wobei diese wenigstens in zwei Arbeitspunkten betrachtet werden. Es erfolgt eine Erkennung auf einen Arbeitspunkt im Betrieb der Brennkraftmaschine und die Werte der Residuen an diesem Arbeitspunkt werden abgespeichert. Nachdem ein weiterer, vom ersten verschiedener Arbeitspunkt erkannt wurde, werden die Daten der Residuen an diesem Arbeitspunkt ebenfalls gespeichert. Es werden nachfolgend die Abweichungen der Residuen in den einzelnen Arbeitspunkten bewertet und als weitere Diagnoseinformation $\tilde{r}$ der Auswerteeinheit AW zur Verfügung gestellt. Die Arbeitspunkte sind dabei vorzugsweise stationäre Arbeitspunkte. Ein weiterer Verfahrensschritt zur Bildung der weiteren Diagnoseinformation $\tilde{r}$ ist eine Entkopplung der aus den verschiedenen Arbeitspunkten resultierenden Residuenabweichung. Innerhalb der Auswerteeinheit AW erfolgt auf Basis der Diagnoseinformationen mittels einer Fusion eine ganzheitliche Auswertung der Residuen $r_1$, $r_2$..., $r_x$ sowie der aus den arbeitspunktspezifischen Abweichungen gewonnenen weiteren Diagnoseinformation $\tilde{r}_1, \tilde{r}_2, ..., \tilde{r}_y$, wobei die Fehlerart bestimmt wird und eine quantitative Schätzung des Fehlers erfolgt.

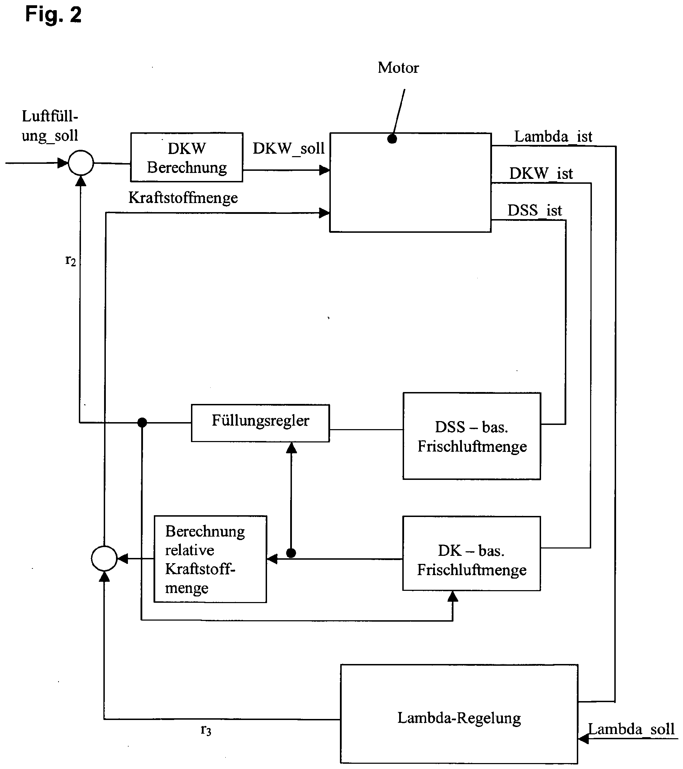

Fig. 2 zeigt eine aus den komplexen Steuergerätefunktionen zur Steuerung einer Brennkraftmaschine identifizierte Regelkreisstruktur. Dargestellt ist diese für eine Brennkraftmaschine mit Saugrohrdruckmessung, bei welcher der Messwert des Saugrohrdrucksensors DSS_ist dem Steuergerät anliegt. Weiterhin erfolgt eine Messung des Drosselklappenwinkels DKW_ist und des Istwertes der Lambdasonde Lambda_ist. Die Regelung der Brennkraftmaschine erfolgt mittels einer Regelung der einzuspritzenden Kraftstoffmenge und der dem Motor zuzuführenden Luftfüllung. Die Kraftstoffmenge wird dabei auf Basis des einzustellenden Lambdawertes Lambda_soll berechnet, wobei ein Drosselklappensollwert DKW_soll auf Basis des Fahrerwunsches und weiterer Momentanforderungen gebildet wird. Die identifizierte Regelkreisstruktur ergibt sich dabei zu einer Kaskadenregelung, wobei der Regelkreis der Lambdaregelung den äußeren Regelkreis zur Füllungsregelung bildet. Anhand der identifizierten Regelkreisstruktur wird nachfolgend die Bildung der in Fig. 1 beschriebenen Residuen sowie das erfindungsgemäße Diagnoseverfahren näher beschrieben. Das Residuum $r_2$ wird aus dem Ausgang des Füllungsreglers gebildet, in welchem die Information aus der Korrektur des Massenstromes über der Drosselklappe enthalten ist. Das Residuum $r_2$ (Füllungsresiduum) umfasst die gesamte Massenstromkorrektur, mit der die Drosselklappenposition über die Regelung korrigiert wird. Diese Massenstromkorrektur stützt sich auf den Vergleich zwischen saugrohrdrucksensorbasierter und drosselklappenbasierter Füllungsberechnung und ist neben einer geringen Arbeitspunktabhängigkeit vor allem fehlerabhängig. Die Arbeitspunktabhängigkeit basiert im Wesentlichen auf serienmäßig bedingten Abweichungen in der Applikation sowie äußeren Störeinflüssen und wird durch die Einführung eines Toleranzbereiches, der durch eine geeignete Schwelle begrenzt wird, berücksichtigt.

Das Residuum $r_3$ basiert auf der Kraftstoffmengenkorrektur über den Vergleich von Lambda_ist und Lambda_soll. Der Wert Lambda_ist entspricht dem Messwert der Lambdasonde im Krümmer des Abgassystems. Der Sollwert Lambda_soll wird im Steuergerät auf Basis des geforderten Betriebsmodus (z. B. Homogen- oder Schichtbetrieb), evtl. auch durch andere Einrichtungen (z. B. Bauteilschutz) vorgegeben. Gleichzeitig wird über den Sollwert sowie die berechnete Luftmenge in den Zylindern eine Kraftstoffmenge vorgegeben, bei der unter normalen Bedingungen keine Korrektur durch die Lambdaregelung erforderlich ist. Kommt es dennoch zu einer Korrektur der Lambdaregelung über einen vorgebbaren Schwellwert hinaus, so kann von einer fehlerbehafteten Betriebssituation ausgegangen werden.

Ausgehend vom gemessenen Istwert Lambda_ist spiegeln sich hier das tatsächlich in der Verbrennungskraftmaschine vorliegende Kraftstoff-Luftverhältnis sowie die Einflussgrößen der Verbrennung wieder.

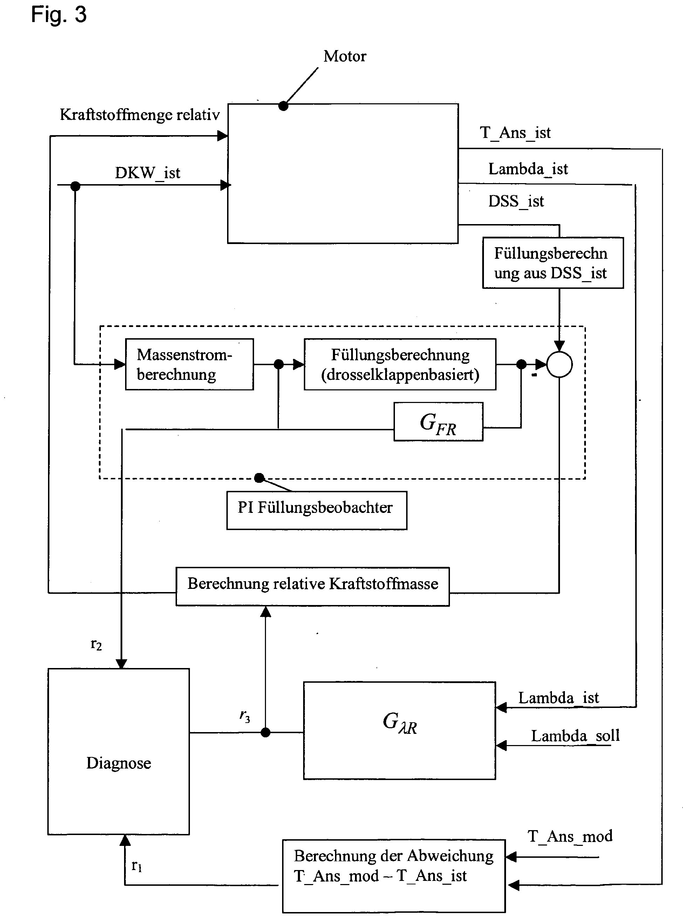

Fig. 3 zeigt die Interpretation des erfindungsgemäßen Gesamtsystems aus Sicht der Fehlerdiagnose, wobei die Residuen $r_1$, $r_2$ und $r_x$ einer Diagnoseeinheit angeschlossen sind. Es ist hier die bereits zu Figur 2 dargestellte Residuenbildung aus dem Stellsignal des Lambdareglers und aus dem Stellsignal des Füllungsreglers dargestellt. Als weiteres Residuum $r_3$ ist der Vergleich der modellierten Temperatur T_Ans_mod im Saugrohr und der Isttemperatur im Saugrohr T_Ans_ist Eingang des Diagnosesystems. Die für die Füllungsregelung und die Füllungsbeobachtung verwendeten Modelle enthalten nichtlineare Funktionsanteile $f_{1..n}$ und sind damit arbeitspunktabhängig. Die Kenntnis dieser Nichtlinearitäten wird nachfolgend zur Bildung weiterer Zusatzinformationen für die Diagnose genutzt.

Auf Basis der Residuen $r_1$, $r_2$ und $r_3$ allein sind verschiedene Fehler z. B. Saugrohr- und Umgebungsdrucksensorfehler (DSSF,DSUF $\rightarrow \Delta p$) sowie Fehler, die von Leckagen im Saugrohr oder der Verschmutzung der Drosselklappe herrühren (LS, DKV $\rightarrow \Delta A$), nicht voneinander unterscheidbar, da die Fehlereinflüsse tendenziell vergleichbare Auswirkungen zeigen. Es bedarf daher der Gewinnung von zusätzlichen Diagnoseinformationen zur Fehlerseparierung. Dies erfolgt in einem weiteren Verfahrensschritt (Verfahrensschritt 3 Fig. 1). Nachfolgend wird diese komplexe Fehlerdiagnose aus Verfahrensschritt 3 näher erläutert. Es werden die Bildung von zusätzlichen Diagnoseinformationen durch die arbeitspunktspezifische Betrachtung der Fehlereinflüsse und die Entkopplung der Fehler und Fehlergruppen sowie deren quantitative Schätzung dargestellt.

Das nachfolgend dargestellte, rekursive Verfahren zur Entkopplung von Fehlern bzw. Fehlergruppen basiert auf den durch das nichtlineare Systemverhalten entstehenden, linear unabhängigen Fehlereinflüssen. Die lineare Unabhängigkeit der Einflüsse stellt dabei die Grundvoraussetzung für die Anwendung des Verfahrens dar. Für die Umsetzung bedeutet dies, dass verschiedene Fehler mit tendenziell ähnlichem Einflussverhalten nicht wirkungsvoll entkoppelt werden können und damit in Fehlergruppen zusammengefasst werden müssen. Das Verfahren wird nun im Folgenden am Beispiel ausgewählter Fehler vorgestellt. Ein Saugrohrdrucksensorfehler DSSF, ein Umgebungsdrucksensorfehler DSUF, der durch ein Leck im Saugrohr LS hervorgerufene Fehler sowie eine Drosselklappenverschmutzung DKV bewirken in den betrachteten Residuen ähnliche Fehlersignale. Beispielhaft wird dies an nachfolgender Tabelle 1 sichtbar. Ein Fehler Leck im Saugrohr LS, eine Drosselklappenverschmutzung DKV sowie ein Fehler des Umgebungsdrucksensors DSUF lassen sich nicht voneinander unterscheiden. Saugrohr- und Umgebungsdrucksensorfehler (DSSF,DSUF $\rightarrow \Delta p$), als auch Leckage und Verstopfung (LS, DKV $\rightarrow \Delta A$) sind hinsichtlich ihrer Auswirkung linear abhängig. Die Einflüsse bzw. Ursachen der Fehlergruppen zeigen jedoch ein voneinander verschiedenes Verhalten, worin eine lineare Unabhängigkeit der beiden Fehlergruppen begründet liegt. Damit ist die Voraussetzung für eine Entkopplung dieser beiden Fehlergruppen erfüllt. Ausgangspunkt für die Einführung des Verfahrens ist die Betrachtung der Summe der Einflüsse der zu untersuchenden Fehler und Fehlergruppen an zwei unterschiedlichen Arbeitspunkten ($k - 1$, $k$). Dies ist der Kerngedanke des erfindungsgemäßen Verfahrens. Auf Basis der Nichtlinearitäten der Modelle zeigen sich arbeitspunktspezifische Abweichungen, welche zur Gewinnung einer weiteren Diagnoseinformation genutzt werden können. Beispielhaft wird das Verfahren anhand des Residuums $r_2$ beschrieben, welche für zwei Arbeitspunkte ($k - 1$, $k$) betrachtet wird. Der Zusammenhang des Residuums zu den physikalischen Einflussgrößen Saugrohrdruck und Saugrohrfläche wird über die Übergangsfunktionen $g_1$ und $g_2$ beschrieben. Die linearisierten Fehlereinflüsse von DSSF, DSUF werden dabei durch g1 und die linearisierten Fehlereinflüsse LS, DKV durch g2 beschrieben.

Daraus ergibt sich Gl. 1 und 2 zu

$$r_2(k) = g_1(k)\Delta p + g_2(k)\Delta A \tag{1}$$

$$r_2(k-1) = g_1(k-1)\Delta p + g_2(k-)\Delta A \qquad (2)$$

Diese Gleichungen können auch in der Form

$$\begin{bmatrix} r_2(k) \\ r_2(k-1) \end{bmatrix} = \underbrace{\begin{bmatrix} g_1(k)g_2(k) \\ g_1(k-1)g_2(k-1) \end{bmatrix}}_{G}\begin{bmatrix} \Delta p \\ \Delta A \end{bmatrix} \qquad (3)$$

mit den stellvertretend für diese Fehlergruppen stehenden Einflussfunktionen
dargestellt werden. Die Voraussetzung der linearen Unabhängigkeit der Fehlereinflüsse lässt sich für ein System 2. Ordnung durch Prüfung des Ranges der Matrix G mit der Bedingung

$$Rang(G) = 2 \qquad (4)$$

prüfen. Eine Entkopplung der Fehlereinflüsse in Gleichung 2 ist mit einer Transformation des Gleichungssystems auf Diagonalform zu erzielen. Dazu ist das System mit der inversen Matrix G zu multiplizieren, damit ergibt sich Gleichung (5)

$$G^{-1}\begin{bmatrix} r_2(k) \\ r_2(k-1) \end{bmatrix} = \underbrace{G^{-1}G}_{I}\begin{bmatrix} \Delta p \\ \Delta A \end{bmatrix} \qquad (5)$$

mit

$$G^{-1} = \frac{1}{g_1(k)g_2(k-1) - g_1(k-1)g_2(k)}\begin{bmatrix} g_2(k-1) - g_2(k) \\ -g_1(k-1)g_1(k) \end{bmatrix}$$

und

$$\det G = g_1(k)g_2(k-1) - g_1(k-1)g_2(k).$$

Auf Basis der Definition der neuen Residuensignale

$$\begin{bmatrix} \tilde{r}_{21}(k) \\ \tilde{r}_{22}(k) \end{bmatrix} := G^{-1}\begin{bmatrix} r_2(k) \\ r_2(k-1) \end{bmatrix} \qquad (6)$$

ist die Online-Berechnung der neuen Residuensignale in der Form

$$\begin{bmatrix} \tilde{r}_{21}(k) \\ \tilde{r}_{22}(k) \end{bmatrix} = \begin{bmatrix} \dfrac{r_2(k)g_2(k-1) - r_2(k-1)g_2(k)}{g_1(k)g_2(k-1) - g_1(k-1)g_2(k)} \\ \dfrac{r_2(k-1)g_1(k) - r_2(k)g_1(k-1)}{g_1(k)g_2(k-1) - g_1(k-1)g_2(k)} \end{bmatrix} \qquad (7)$$

durchzuführen. Gleichzeitig kann für die neuen Residuen der Zusammenhang

$$\begin{bmatrix} \tilde{r}_{21}(k) \\ \tilde{r}_{22}(k) \end{bmatrix} = \begin{bmatrix} \Delta p \\ \Delta A \end{bmatrix} \quad (8)$$

aus Gleichung (5) abgeleitet werden. Damit wird neben der Zielsetzung der Entkopplung der Fehlergruppen auch eine direkte Fehlergrößenschätzung realisiert.

Das oben dargestellte Grundprinzip der Fehlerentkopplung wird nachfolgend an einem Beispiel näher erläutert. Es wird ein für die Implementierung des Verfahrens in ein Steuergerät geeigneter Algorithmus dargestellt. Hierfür spielen Anforderungen an vorhandene Ressourcen (Rechenaufwand, Speicherplatzbedarf), Robustheit gegenüber Modellungenauigkeiten und die numerische Stabilität eine wichtige Rolle.

Eine geeignete Vorgehensweise ist die rekursive Berechnung der gewünschten Größen. Auf Basis des allgemeinen Ansatzes

$$\bar{r}(k) = \beta r(k) + (1 - \beta) r(k - 1) \quad (9)$$

lassen sich mit Hilfe des Vergessensfaktors $\beta$ die zu implementierenden Algorithmen in Gleichung 10

$$\Delta p = \tilde{r}_{21}(k) = \beta(r_2(k)g_2(k-1) - r_2(k-1)g_2(k)) + (1 - \beta \det G)\tilde{r}_{21}(k-1)$$

und Gleichung 11

$$\Delta A = \tilde{r}_{22}(k) = \beta(r_2(k-1)g_1(k) - r_2(k)g_1(k-1)) + (1 - \beta \det G)\tilde{r}_{22}(k-1)$$

zur Fehlerisolierung und Schätzung ableiten.

Neben den direkten Fehlerschätzungen in den Fällen DSSF, LS, DKV, welche sich aus der Fehlerentkopplung ergeben, ist die Bereitstellung einer solchen, gegenüber Modellungenauigkeiten und Störeinflüssen robusten Fehlerschätzung auch für die anderen Fehler und damit Residuen wünschenswert. Aus diesem Grund wird innerhalb dieser Stufe mit Hilfe der identifizierten Fehlereinflussfunktionen eine rekursive Schätzung der Fehlergröße vorgenommen. Die berechnete Fehlergröße kann somit nach der Isolation des aufgetretenen Fehlers ausgelesen werden. Im Einzelnen lassen sich auf Basis der beispielhaft betrachteten Residuen die zusätzlichen Fehlerschätzungen

$$\Delta T(k) = \beta \Delta r_1(k) + (1 - \beta) \Delta T(k - 1) \qquad (12)$$

für einen identifizierten Temperatursensorfehler ($T_s$ oder $T_{VDK}$),

$$\Delta pu(k) = \beta \frac{\Delta r_2(k)}{\left. \dfrac{\delta f_1}{\delta pvdk\_w} \right|_{AP}} + (1 - \beta) \Delta pu(k - 1) \qquad (13)$$

für den Fall, dass ein Umgebungsdrucksensorfehler identifiziert wurde, wobei

$$\left. \frac{\delta f_1}{\delta pvdk\_w} \right|_{AP}$$

den linearisierten Fehlereinfluss des Umbebungsducksensors auf das Residuum 2 beschreibt, und

$$\Delta\lambda = \beta \frac{\Delta r_3(k)}{FM\_rel(k)} 100\% + (1-\beta)\Delta\lambda(k-1) \qquad (14)$$

im Fall eines identifizierten Fehlers in der Lambda-Sonde erzeugen.

FM_rel ist dabei die drosselklappenbasiert gebildete, relative Frischluftmenge.

Die Größen $\Delta r_1$, $\Delta r_2$, $\Delta r_3$ bezeichnen in diesem Zusammenhang die durch den jeweiligen Fehler verursachten Abweichungen in den Residuen.

Damit liegt zusätzlich zur Fehlerisolierung für jeden betrachteten Fehler eine Schätzung der Größenordnung vor.

Nachfolgend wird der Verfahrensschritt 4 (Fig. 1) der Fusion beschrieben.

Die nachfolgende Tabelle zeigt, dass sich bereits einzelne Fehler und Fehlergruppen durch geeignete Kombination der Information aus den Residuen $r_1$, $r_2$ und $r_3$ bilden lassen. Ein Fehler des Saugrohrdrucksensors DSSF, ein Saugrohrtemperatursensorfehler TSSF und ein Sensorfehler des Temperatursensors vor der Drosselklappe TSVDKF lässt sich aus den Residuen $r_1$, $r_2$ und $r_3$ ermitteln, wobei sich die Fehler voneinander isolieren lassen. Ein Fehler Leck im Saugrohr LS, eine Drosselklappenverschmutzung DKV sowie ein Fehler des Umgebungsdrucksensors DSUF lassen sich nicht voneinander unterscheiden.

Zur Dokumentation der Leistungsfähigkeit des Verfahrens werden im weiteren Verlauf beispielhaft die folgenden Fehlersituationen näher betrachtet:

DSSF        Offsetfehler im Saugrohrdrucksensor
LS          Leckage im Saugrohr
DKV         Verschmutzung im Bereich der Drosselklappe
TSSF        Offsetfehler im Saugrohrtemperatursensorfehler
DSUF        Offsetfehler im Umgebungsdrucksensorfehler
TSVDKF      Offsetfehler im Umgebungstemperatursensorfehler
LSF         Offsetfehler in der Lambda-Sonde

Die nachfolgende Tabelle 1 verdeutlicht die einzelnen Fehlereinflüsse auf die Residuen.

Tabelle 1

|       | DSSF | LS | DKV | TSSF | DSUF | TSVDKF | LSF |
|-------|------|------|------|------|------|--------|------|
| $r_1$ | kein Einfluss | kein Einfluss | kein Einfluss | Einfluss | kein Einfluss | Einfluss | kein Einfluss |
| $r_2$ | Einfluss | Einfluss | Einfluss | Einfluss | Einfluss | Einfluss | kein Einfluss |
| $r_3$ | Einfluss | kein Einfluss | kein Einfluss | Einfluss | kein Einfluss | kein Einfluss | Einfluss |

Hervorzuheben in diesem Zusammenhang ist die Tatsache, dass eine Fehlerunterscheidung (vgl. Spalten 2, 3, 5, LS, DKV, DSUF) ohne weitergehende Maßnahmen nicht möglich ist.

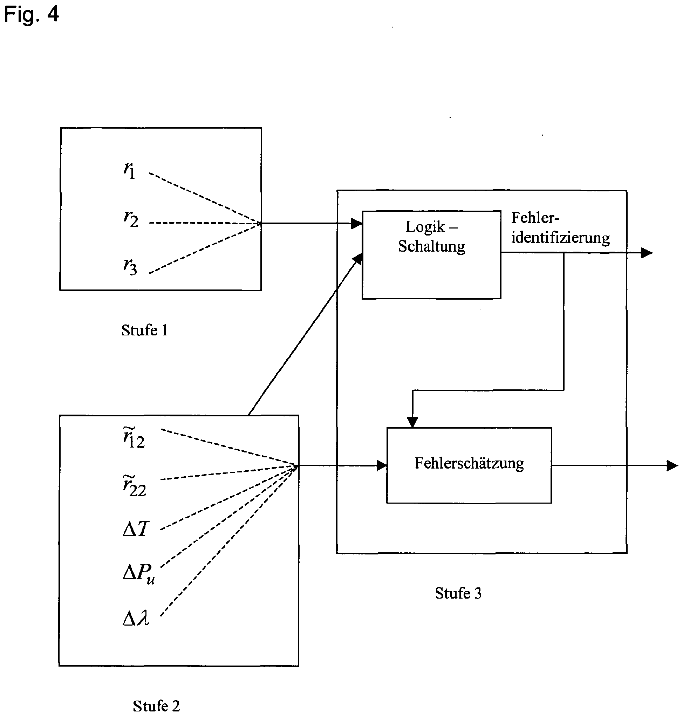

Eine komplette Fehlerisolierung ist nur dann möglich, wenn die Ergebnisse aus beiden Verfahrensschritten der Bildung der Residuen $r_1$, $r_2$ und $r_3$, (Verfahrensschritt 2) sowie die zusätzliche Diagnoseinformation $\tilde{r}_1, \tilde{r}_2, ..., \tilde{r}_y$ (Verfahrensschritt 3) kombiniert ausgewertet werden. Dies geschieht nun in dem hier beschriebenen Verfahrensschritt 4 durch die Fusion der Informationen. Eine mögliche Realisierung ist beispielsweise die Verwendung von Logikschaltungen sowie die Definition der erforderlichen Schnittstellen für die Weitergabe der Informationen innerhalb des Steuergerätes. Die prinzipielle Fusion der Daten bzw. Informationen ist in Figur 4 dargestellt. Ausgangspunkt sind die im Verfahrensschritt 2 gebildeten Residuen, welche Eingangsgrößen der Fusion sind. Weiterhin liegen die Schätzungen der Absolutwerte der Fehlergrößen (hier beispielhaft für $\Delta A, \Delta p, \Delta T, \Delta\lambda$ und $\Delta p_U$ gezeigt) und die zusätzlich gewonnenen Diagnoseinformationen $\tilde{r}_{12}$ und $\tilde{r}_{22}$ der Fusion als Eingangsgrößen an. Mittels einer Auswertelogik wird die Art des Fehlers bestimmt sowie eine Fehlerschätzung bei erkanntem Fehler auf Basis der Fehlergrößenschätzungen gebildet.

Tabelle 2 zeigt die um die zusätzliche Diagnoseinformation erweiterte Tabelle der Einflussgrößen.

Hier wird deutlich, dass sich die einzelnen Fehlerarten ein Fehler Leck im Saugrohr LS, eine Drosselklappenverschmutzung DKV sowie ein Fehler des Umgebungsdrucksensors DSUF durch die zusätzlich gewonnene Diagnoseinformation voneinander isolieren lassen.

**Tabelle 2**

|  | DSSF | LS | DKV | TSSF | DSUF | ' TSVDKF | LSF |
|---|---|---|---|---|---|---|---|
| $r_1$ | kein Einfluss | kein Einfluss | kein Einfluss | Einfluss | kein Einfluss | Einfluss | kein Einfluss |
| $r_2$ | Einfluss | pos. Einfluss | neg. Einfluss | Einfluss | Einfluss | Einfluss | kein Einfluss |
| $r_3$ | Einfluss | kein Einfluss | kein Einfluss | Einfluss | kein Einfluss | kein Einfluss | Einfluss |
| $\tilde{r}_{12}$ | Einfluss | kein Einfluss | kein Einfluss | ohne Berücksichtigung | Einfluss | ohne Berücksichtiqunq | kein Einfluss |
| $\tilde{r}_{22}$ | kein Einfluss | pos. Einfluss | neg. Einfluss | kein Einfluss | kein Einfluss | kein Einfluss | kein Einfluss |
| **Einfluss:** Fehlerauswirkung kann sowohl negativ als auch positiv sein (abhängig von Fehlergröße) | | | | | | | |
| **pos./neg. Einfluss:** in diesen Fällen ist eine genaue Spezifikation des Einflusses möglich (über Fehlermodell) | | | | | | | |

Diese Tabelle ist gleichzeitig Grundlage für die Fehlerentscheidungslogik (vgl. Fig. 1)

Die hier dargestellte Tabelle 2 zeigt einen Auszug der Situation nach der zusätzlich durchgeführten, modellbasierten Fehlerentkopplung. Es wird deutlich, dass auf Basis der Ergebnisse in der Tabelle eine eindeutige Zuordnung der Beeinflussung zu einem Fehler möglich wird.

**Bezugszeichenliste**

| 1 | Verfahrensschritt 1 Residuenbildung |
|---|---|
| 2 | Verfahrensschritt 2 Residuenauswertung (absolut) |
| 3 | Verfahrensschritt 3 komplexe Fehlerdiagnose/ Bildung weiterer Diagnoseinformation |
| 4 | Verfahrensschritt 4 Fusion der Daten |
| AW | Auswerteeinheit |
| SG | Steuergerät |
| AP | Arbeitspunkt |
| k, k-1... | spezifischer Arbeitspunkt |
| $g_1$, $g_2$ | Übergangsfunktionen |
| DSS_ist | Messwert Saugrohrdrucksensor |
| DKW_soll | Sollwert Drosselklappensensor |
| DKW_ist | Istwert Drosselklappensensor |
| Lambda_ist | Messwert Lambdasonde |
| Lambda_soll | Sollwert Lambdasonde |
| T_Ans_mod | modellierte Temperatur im Ansaugtrakt |
| T_Ans_ist | gemessene Temperatur im Ansaugtrakt |
| $f_1, f_2, ... f_n$ | nichtlineare Funktionsanteile |
| $G_{FR}$ | Übergangsfunktion des Füllungsreglers |
| $G_{\lambda R}$ | Übergangsfunktion des Lambdareglers |
| DSSF | Offsetfehler im Saugrohrdrucksensor |
| LS | Leckage im Saugrohr |
| DKV | Verschmutzung im Bereich der Drosselklappe |
| TSSF | Offsetfehler im Saugrohrtemperatursensorfehler |
| DSUF | Offsetfehler im Umgebungsdrucksensorfehler |
| TSVDKF | Offsetfehler im Umgebungstemperatursensorfehler |
| LSF | Offsetfehler in der Lambdasonde |
| $r_1, r_2, ..., r_x$ | Residuen |
| $\tilde{r}_1, \tilde{r}_2, ..., \tilde{r}_y$ | weitere Diagnoseinformation |
| FM_rel | drosselklappenbasiert gebildete, relative Frischluftmenge |
| $\Delta r_1, \Delta r_2, \Delta r_3$ | fehlerverursachte Abweichung in den Residuen |

**Patentansprüche**

1. Verfahren zur Fehlerdiagnose eines Verbrennungsmotors, wobei die Auswertung wenigstens einer erfassten Messgröße in Bezug auf einen zugehörigen, durch eine Modellrechnung für diese Größe erhaltenen Modellwert erfolgt, und wobei eine Abweichung (r) des Messwertes vom Modellwert zur Auswertung herangezogen wird, **dadurch gekennzeichnet, dass** wenigstens an zwei Arbeitspunkten des Verbrennungsmotors eine Aufnahme des Mess und Modellwertes erfolgt, wobei aus unterschiedlichen Abweichungen (r(k), r(k-1)...) von Mess- und Modellwert an den einzelnen Arbeitspunkten eine weitere Diagnoseinformation ($\tilde{r}$) gebildet wird, wobei die Abweichung (r) des Messwertes vom Modellwert und die weitere Diagnoseinformation ($\tilde{r}$) aus der arbeitspunktabhängigen Veränderung der Abweichung von Mess- und Modellwert zur Bestimmung der Fehlerursache ausgewertet werden.

2. Computerprogramm, **dadurch gekennzeichnet, dass** es alle Schritte des Verfahrens nach Anspruch 1 durchführt wenn es auf einem Motorsteuergerät ausgeführt wird, wobei es auf dessen Speicher abgelegt ist.

3. Steuer- oder Regeleinrichtung zum Betreiben eines Verbrennungsmotors, **dadurch gekennzeichnet, dass** diese einen Speicher umfasst, auf welchem ein Computerprogramm nach Anspruch 2 abgelegt ist.

**Claims**

1. Method for performing fault diagnosis of an internal combustion engine, wherein at least one detected measurement variable is evaluated with respect to an associated model value which is obtained by means of a model calculation for this variable, and wherein a deviation (r) of the measured value from the model value is used for the evaluation, **characterized in that** the measured value and the model value are recorded at at least two working points of the internal combustion engine, wherein a further diagnostic information item ($\tilde{r}$) is formed from different deviations (r(k), r(k-1)...) between the measured value and the model value at the individual working points, wherein the deviation (r) of the measured value from the model value and the further diagnostic information item ($\tilde{r}$) are evaluated on the basis of the working-point-dependent change in the deviation of the measured value and the model value in order to determine the cause of the fault.

2. Computer program, **characterized in that** it carries out all the steps of the method according to Claim 1 when it is executed on an engine control unit, wherein it is stored in the memory of said unit.

3. Open-loop or closed-loop control device for operating an internal combustion engine, **characterized in that** said device has a memory in which a computer program according to Claim 2 is stored.

**Revendications**

1. Procédé de diagnostic de défaut d'un moteur à combustion interne, dans lequel l'évaluation d'au moins une grandeur de mesure détectée est effectuée par rapport à une valeur de modèle correspondante obtenue par un calcul de modèle pour ladite grandeur, et dans lequel l'écart (r) de la valeur de modèle est prise en compte pour l'évaluation, **caractérisé en ce qu'**une acquisition des valeurs de mesure et de modèle est effectuée en au moins deux points de fonctionnement du moteur à combustion interne, dans lequel une autre information de diagnostic ($\tilde{r}$) est établie à partir des écarts (r(k), r(k-1), ...) des valeurs de mesure et de modèle aux points de fonctionnement individuels, dans lequel l'écart (r) de la valeur de mesure par rapport à la valeur de modèle et l'autre information de diagnostic ($\tilde{r}$) sont évalués à partir de la variation en fonction du point de fonctionnement de l'écart des valeurs de mesure et de modèle afin de déterminer la cause du défaut.

2. Programme d'ordinateur, **caractérisé en ce qu'**il met en oeuvre toutes les étapes du procédé selon la revendication 1 lorsqu'il est exécuté sur un appareil à moteur dans la mémoire duquel est stocké ledit programme d'ordinateur.

3. Dispositif de commande ou de régulation destiné au fonctionnement d'un moteur à combustion interne, **caractérisé en ce qu'**il comprend une mémoire dans laquelle est stocké un programme d'ordinateur selon la revendication 2.

# Fig. 1

SG

1

4

$r_1$  $r_2$  . . .  $r_n$

3

Bildung weitere
Diagnoseinformation /
Entkopplung

stat. AP

Schwellwertprüfung

2

# Fig. 2

# Fig. 3

Motor

Kraftstoffmenge relativ

DKW_ist

T_Ans_ist

Lambda_ist

DSS_ist

Füllungsberechn
ung aus DSS_ist

Massenstromberechnung

Füllungsberechnung
(drosselklappenbasiert)

$G_{FR}$

PI Füllungsbeobachter

Berechnung relative Kraftstoffmasse

$r_2$

$r_3$

$G_{\lambda R}$

Lambda_ist

Lambda_soll

Diagnose

T_Ans_mod

Berechnung der Abweichung
T_Ans_mod – T_Ans_ist

$r_1$

Fig. 4

$r_1$

$r_2$

$r_3$

Stufe 1

$\tilde{r}_{12}$

$\tilde{r}_{22}$

$\Delta T$

$\Delta P_u$

$\Delta \lambda$

Stufe 2

Logik –
Schaltung

Fehleridentifizierung

Fehlerschätzung

Stufe 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19750191 A1
- DE 10021639 C1
- US 2004078171 A1